# EUROPEAN PATENT APPLICATION

(11) **EP 2 187 676 A1**
(43) Date of publication of application: **19.05.2010**
(21) Application number: 08829455.8
(22) Date of filing: 05.09.2008
(51) Int. Cl.: H04W 4/00

(54) **WIRELESS COMMUNICATION DEVICE AND TRANSMISSION METHOD**

(30) Priority: 07.09.2007 JP 2007232960; 28.01.2008 JP 2008016468
(71) Applicant: Panasonic Corporation, Kadoma-shi Osaka 571-8501 (JP)
(72) Inventor: MIYOSHI, Kenichi c/o Panasonic Corporation, Osaka 540-6207 (JP); SUZUKI, Hidetoshi c/o Panasonic Corporation, Osaka 540-6207 (JP); ARAMAKI, Takashi c/o Panasonic Corporation, Osaka 540-6207 (JP); KOBAYAKAWA, Yuichi c/o Panasonic Corporation, Osaka 540-6207 (JP); HIRAMATSU, Katsuhiko c/o Panasonic Corporation, Osaka 540-6207 (JP)
(74) Representative: Grünecker, Kinkeldey, Stockmair & Schwanhäusser Anwaltssozietät
(86) International application number: PCT/JP2008/002460
(87) International publication number: WO 2009/031320

(57) **Abstract**

A wireless communication device, e.g., a mobile station, capable of performing its communication and relay processing for another mobile station, when requested, at the same time without stopping the communication and the relay processing. In the device, an outgoing/incoming call request detection unit (106) detects an outgoing/incoming call request indicating that an outgoing call of the signal of the mobile station or an incoming call is requested from a signal inputted from an upper-layer processing unit (105). A relay request detection unit (108) detects a relay request signal indicating that an MS1 requests an MS2 for relay to a base station from a demodulated relay signal inputted from a relay signal demodulation unit (107). A communication rate determination unit (109) determines the communication rate so as to simultaneously transmit both the signal of the mobile station and the relay signal when a signal indicating that an outgoing/incoming call request is detected is inputted from the outgoing/incoming call request detection unit (106) or a signal indicating that a relay request signal is detected is inputted from the relay request detection unit (108).

## Description

### Technical Field

The present invention relates to a radio communication apparatus and a transmission method.

### Background Art

In recent years, along with the multimediatization of information in cellular mobile communication systems, transmitting high capacity data such as still images and movies in addition to speech data has been popularized. To realize the transmission of high capacity data, a technique in which a high-frequency radio band is used to obtain a high transmission rate has been studied actively.

However, when a high-frequency radio band is used, although a high transmission rate can be expected in a short distance, attenuation due to the transmission distance becomes greater as the distance increases. Accordingly, when a mobile communication system employing a high-frequency radio band is actually operated, the coverage area of each base station becomes small, which thus requires that a larger number of base stations be set up. Since the set-up of base stations involves considerable costs, a technique is strongly demanded for realizing communication services which employ a high-frequency radio band and preventing an increase in the number of base stations.

To address this demand, relay techniques to set up relay stations between a mobile station and a base station and perform communication between the mobile station and the base station via the relay stations have been studied. One of such relay techniques is a technique to relay signals from another mobile station by making the mobile station function as a relay station (e.g., see Patent Document 1). According to this conventional technique, when the mobile station receives a relay request signal from another mobile station, the mobile station relays the signal between another mobile station and the base station.
Patent Document 1: Japanese Patent Application Laid-Open No.2005-341300

### Disclosure of Invention

### Problems to be Solved by the Invention

However, according to the above-described conventional technique, when receiving a relay request signal from another mobile station, if the mobile station is performing communication processing of the mobile station and using available communication resources for signals of the mobile station, that is, if the mobile station does not have a capacity enough to relay the relay signal in parallel with the communication processing of the mobile station, the mobile station cannot relay the relay signal. On the other hand, for a case in which communication processing of the mobile station occurs while the mobile station performs relay transmission, it is necessary to consider to allow the mobile station to perform the communication processing of the mobile station.

It is therefore an object of the present invention to provide a radio communication apparatus and a transmission method being capable of performing, even when communication processing of the mobile station and relay processing of another mobile station occur at the same time, both the communication on the mobile station and the relay processing of another mobile station can be performed simultaneously and uninterruptedly.

### Means for Solving the Problem

The radio communication apparatus of the present invention adopts a configuration including: a first detection section that detects call transmission or call reception of a first signal of the radio communication apparatus; a second detection section that detects a relay request of a second signal of another radio communication apparatus; and a transmitting section that transmits both the first signal and the second signal simultaneously when the call transmission or the call reception is detected during relay transmission of the second signal or when the relay request is detected during transmission of the first signal.

### Advantageous Effects of Invention

According to the present invention, it is possible to perform, even when communication processing of the mobile station and relay processing of another mobile station occur at the same time, both the communication on the mobile station and the relay processing of another mobile station can be performed simultaneously and uninterruptedly.

### Brief Description of Drawings

FIG.1 is a diagram illustrating a mobile communication system according to embodiment 1 of the present invention;
FIG.2 is a block diagram illustrating a configuration of the mobile station according to embodiment 1 of the present invention;
FIG.3 illustrates an example of determining a communication rate according to embodiment 1 of the present invention (when a relay request is generated);
FIG.4 illustrates an example of determining a communication rate according to embodiment 1 of the present invention (when a call transmission/reception request of the mobile station is generated);
FIG.5 is a diagram illustrating a CQI table according to embodiment 2 of the present invention;
FIG.6 is a block diagram illustrating a configuration of a mobile station according to embodiment 2 of the present invention;
FIG.7 is a diagram illustrating a handover according to embodiment 2 of the present invention;
FIG.8 is a block diagram illustrating a configuration of a mobile station according to embodiment 3 of the present invention;
FIG.9A is a diagram illustrating an example of calculating a relay probability (calculation method 1) according to embodiment 3 of the present invention;
FIG.9B is a diagram illustrating an example of calculating a relay probability (calculation method 2) according to embodiment 3 of the present invention;
FIG.9C is a diagram illustrating an example of calculating a relay probability (calculation method 3) according to embodiment 3 of the present invention;
FIG.10 is a diagram illustrating another example of calculating a relay probability (conventional example);
FIG.11A is a diagram illustrating another example of calculating a relay probability (example 1) of the present invention;
FIG.11B is a diagram illustrating a further example of calculating a relay probability (example 2) of the present invention; and
FIG.11C is a diagram illustrating a still further example of calculating a relay probability (example 3) of the present invention.

### Best Mode for Carrying Out the Invention

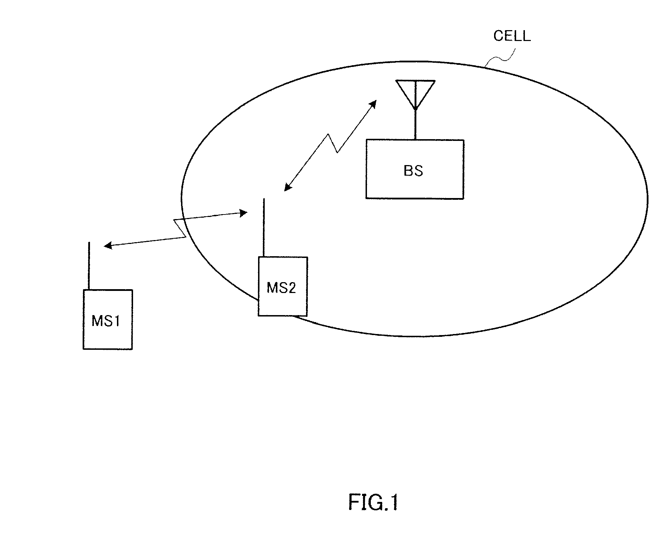

Hereinafter, embodiments of the present invention will be described in detail with reference to the accompanying drawings. The mobile communication system in the following embodiment is a mobile communication system in which a mobile station (MS2) located within a range of a cell of a base station (BS) relays a signal communicated between the base station and another mobile station (MS1) located outside the range of the cell of the base station as shown in FIG.1.

### (Embodiment 1)

According to the present embodiment, when communication processing of MS2 (the mobile station) and relay processing of MS1 (another mobile station) occur at the same time, MS2 transmits a signal of MS2 using a part of communication resources allocated to MS2 and transmits a relay signal using communication resources other than the part of communication resources.

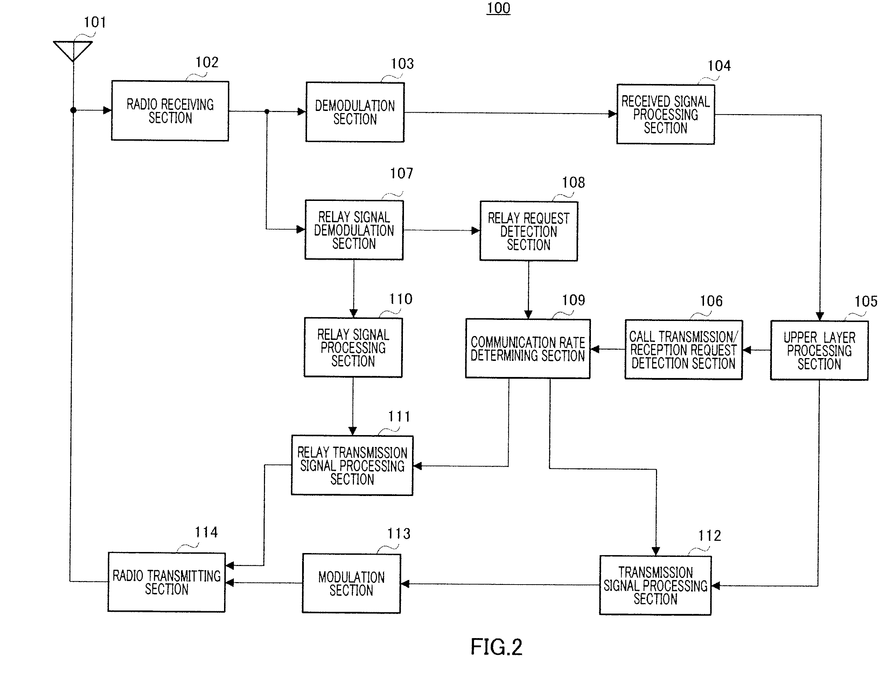

FIG.2 illustrates a configuration of mobile station 100 that performs relay transmission according to the present embodiment. MS1 and MS2 adopt the configuration shown in FIG.2.

In mobile station 100, radio receiving section 102 performs reception processing such as down-conversion and A/D conversion on a signal received via antenna 101. When the received signal is a signal directed to mobile station 100, radio receiving section 102 outputs the signal to demodulation section 103, or when the received signal is a relay signal from another mobile station or a relay signal from the base station, radio receiving section 102 outputs the relay signal to relay signal demodulation section 107.

Demodulation section 103 performs demodulation processing of the signal directed to mobile station 100 inputted from radio receiving section 102. Demodulation section 103 then outputs the demodulated signal to received signal processing section 104.

Received signal processing section 104 performs received signal processing to extract information about a data channel on the demodulated signal inputted from demodulation section 103. Received signal processing section 104 then outputs the data after the received signal processing to upper layer processing section 105.

Upper layer processing section 105 performs processing in a upper layer such as speech signal processing, image processing and multimedia signal processing using the data after the received signal processing inputted from received signal processing section 104. Upper layer processing section 105 then outputs the signal after the upper layer processing to call transmission/reception request detection section 106 and transmission signal processing section 112.

Call transmission/reception request detection section 106 detects, from the signal inputted from upper layer processing section 105, a call transmission/reception request indicating that there is a request for call transmission or call reception of a signal of mobile station 100. When the call transmission/reception request is detected, call transmission/reception request detection section 106 then outputs a signal indicating that the call transmission/reception request has been detected to communication rate determining section 109.

Relay signal demodulation section 107 performs demodulation processing of the relay signal inputted from radio receiving section 102. Relay signal demodulation section 107 then outputs the demodulated relay signal to relay request detection section 108 and relay signal processing section 110.

Relay request detection section 108 detects, from the demodulated relay signal inputted from relay signal demodulation section 107, a relay request signal indicating that MS1 requests MS2 for a relay to the base station. When the relay request signal is detected, relay request detection section 108 outputs a signal indicating that the relay request signal has been detected to communication rate determining section 109.

When the signal indicating that the call transmission/reception request has been detected is inputted from call transmission/reception request detection section 106 or when the signal indicating that the relay request signal has been detected is inputted from relay request detection section 108, communication rate determining section 109 determines a communication rate for the signal of mobile station 100 and a communication rate for the relay signal. Communication rate determining section 109 determines a communication rate so as to transmit the signal of mobile station 100 using a part of communication resources allocated to mobile station 100 and also determines a communication rate so as to transmit the relay signal using the communication resources other than those used for the signal of mobile station 100, among the communication resources allocated to mobile station 100. Communication rate determining section 109 then outputs the communication rate of the signal of mobile station 100 to transmission signal processing section 112 and outputs the communication rate of the relay signal to relay transmission signal processing section 111. Details of the communication rate determining processing in communication rate determining section 109 will be described later.

Relay signal processing section 110 performs relay signal processing to add a control channel and processing of process a data channel for relay transmission on the demodulated relay signal inputted from relay signal demodulation section 107. Relay signal processing section 110 then outputs the relay signal after the relay signal processing to relay transmission signal processing section 111.

Relay transmission signal processing section 111 performs transmission signal processing to form the relay signal inputted from relay signal processing section 110 into a signal format suitable for the base station or the mobile station, which is the destination of relay transmission, according to the communication rate inputted from communication rate determining section 109. Relay transmission signal processing section 111 then outputs the relay signal after the transmission processing to radio transmitting section 114.

Transmission signal processing section 112 performs transmission signal processing to form the signal inputted from upper layer processing section 105 into information of a data channel directed to the destination base station and add a control channel according to the communication rate inputted from communication rate determining section 109. Transmission signal processing section 112 then outputs the signal after the transmission signal processing to modulation section 113.

Modulation section 113 modulates the signal inputted from transmission signal processing section 112. Modulation section 113 then outputs the modulated signal to radio transmitting section 114.

Radio transmitting section 114 performs transmission processing such as D/A conversion, amplification and up-conversion on the relay signal inputted from relay transmission signal processing section 111 and the signal of mobile station 100 inputted from modulation section 113 and transmits the signals from antenna 101.

Next, details of the communication rate determining processing in communication rate determining section 109 will be described.

First, a case where a relay request from MS1 (another mobile station) is generated while MS2 (mobile station 100) is performing communication processing of MS2 will be described.

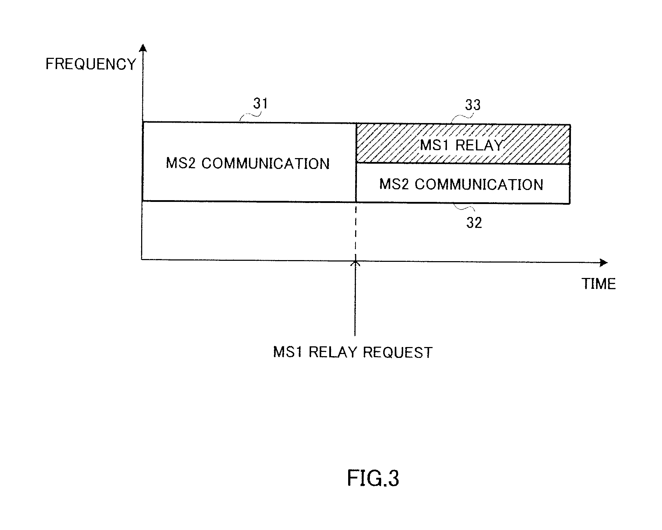

As shown in FIG.3, in MS2, relay request detection section 108 detects a relay request signal (MS1 relay request) from MS1 while performing communication (MS2 communication) of a signal of MS2. Thus, communication rate determining section 109 determines the communication rate such that a part (32) of frequency resources (31) having been used for communication (MS2 communication) of the signal of MS2 continues being used for communication of the signal of MS2, and the remaining frequency resources (33) other than the frequency resources (32) used for communication of the signal of MS2 are used for communication of the relay signal of MS1 (MS1 relay). Here, as shown in FIG.3, communication rate determining section 109 determines a communication rate (half rate) such that the signal of MS2 and the relay signal of MS1 can each use half (32, 33) of the frequency resources (31) for communication of the signal of MS2.

Thus, even if a relay request of MS1 is generated while MS2 is using all available frequency resources (31) for communication of the signal of MS2, the signal of MS2 and the relay signal can each use half (32, 33) of the frequency resources (31), and therefore communication of the signal of MS2 and relay transmission of the relay signal of MS1 can be performed simultaneously. That is, MS2 can continue to perform communication of the signal of MS2 without interrupting communication of the signal of MS2 and, at the same time, can perform newly relay transmission of the relay signal of MS1 without rejecting the relay of the relay signal of MS1.

Next, a case where a call transmission/reception request of MS2 (mobile station 100) is generated while MS2 is performing relay processing of MS1 (another mobile station) will be described.

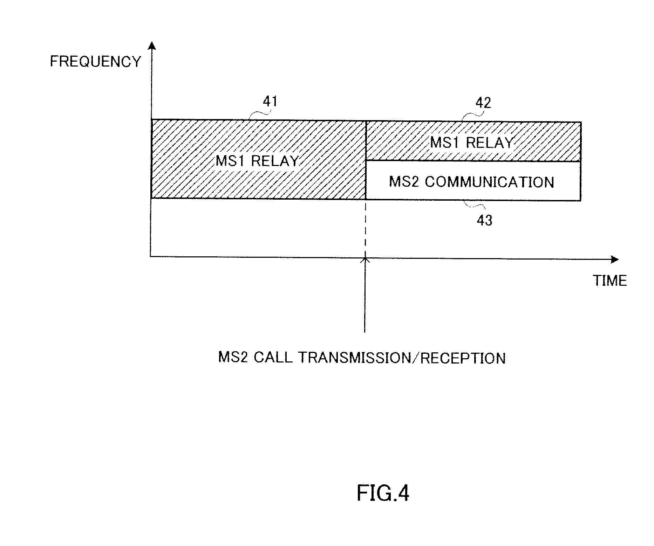

As shown in FIG.4, in MS2, call transmission/reception request detection section 106 detects a call transmission/reception request (MS2 call transmission/reception) of the signal of MS2 while performing communication of the relay signal of MS1 (MS1 relay). Then, communication rate determining section 109 determines the communication rate such that a part (42) of frequency resources (41) used for communication of the relay signal of MS1 (MS1 relay) continues being used for communication of the relay signal of MS1 and the remaining frequency resources (43) other than the frequency resources (42) used for communication of the relay signal of MS1 are used for communication of the signal of MS2 (MS2 communication). Here, as with the case of FIG.3, communication rate determining section 109 determines that each communication rate of the signal of MS2 and the relay signal of MS1 is a half rate as shown in FIG.4.

As a result of this, even when a call transmission/reception request of MS2 is generated while MS2 is using all available frequency resources (41) for relay transmission of the relay signal of MS1, the signal of MS2 and the relay signal can each use half (42, 43) of the frequency resources (41) and therefore MS2 can perform communication of the signal of MS2 and relay transmission of the relay signal of MS1 simultaneously. That is, MS2 can continue performing relay transmission without interrupting the relay transmission of the relay signal of MS1 and, at the same time, can perform new communication of the signal of MS2 without rejecting communication of the signal of MS2.

Thus, according to the present embodiment, when communication processing of the mobile station and relay processing of the relay signal of another mobile station occur at the same time, available frequency resources are used by dividing and multiplexing the frequency resources between communication processing of the mobile station and relay processing of the relay signal. As a result of this, a part of the frequency resources are used by communication of one station and the remaining frequency resources are used by communication of the other station, so that communication of the signal of the mobile station and communication of the relay signal can be performed simultaneously. Therefore, according to the present embodiment, even when communication processing of the mobile station and relay processing of another mobile station occur at the same time, both the communication of the mobile station and the relay processing of another mobile station can be performed simultaneously and uninterruptedly.

Here, a case has been described in the present embodiment where the signal of the mobile station and the relay signal can each use half of the available frequency resources. However, in the present invention, the signal of the mobile station and the relay signal need not necessarily each use half of the available frequency resources. For example, when communication of the mobile station is high-speed data communication and relay communication is speech communication, more frequency resources may be used for communication of the signal of the mobile station. This allows maximum frequency resources to be allocated to high-speed data communication while keeping the quality of relayed speech communication constant.

### (Embodiment 2)

In the present embodiment, when communication processing of MS2 (the mobile station) and relay processing of MS1 (another mobile station) occur at the same time, the relay processing of MS1 is handed over to another relay station (not shown).

Between the base station and each mobile station, each mobile station measures channel quality between the base station and the mobile station using a pilot signal transmitted from the base station. Each mobile station generates a CQI (Channel Quality Indicator), which is channel quality information, based on the channel quality and feeds the CQI back to the base station. The base station determines a modulation scheme of data directed to each mobile station based on the CQI fed back from each mobile station.

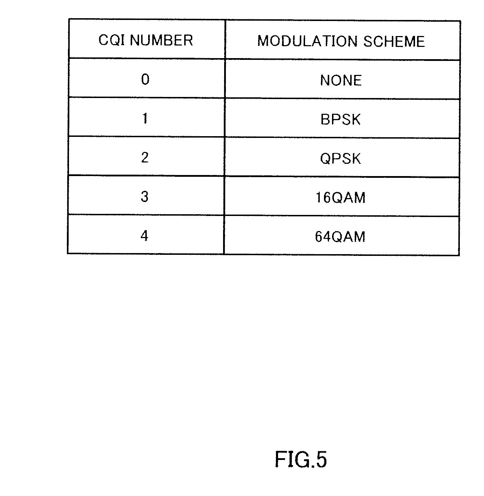

For example, as shown in FIG.5, each mobile station generates CQIs having CQI numbers 0 to 4 based on the channel quality. That is, the channel quality of each mobile station is divided into five levels. Here, suppose the greater the CQI number is, the better the channel quality is. On the other hand, the base station sets a modulation scheme of data directed to each mobile station based on the CQI fed back from each mobile station. That is, the base station transmits data modulated by the modulation scheme that the greater the CQI number is, the greater the M-ary modulation value is, to the mobile station that fed back the CQI.

Furthermore, when a channel is of poor quality, that is, when the CQI number shown in FIG.5 is 0, the base station does not set any modulation scheme (modulation scheme: 'None') and hands over the communication with the mobile station from MS2 to another relay station. As described above, the base station judges whether handover between the relay stations is necessary or not based on the CQI from the mobile station.

According to the present embodiment, when the communication processing of MS2 and the relay processing of MS1 occur at the same time, MS2 updates the CQI received from MS1 to a CQI at a lowest level (CQI number 0), so that the base station hands over the relay processing of MS1 from MS2 to another relay station.

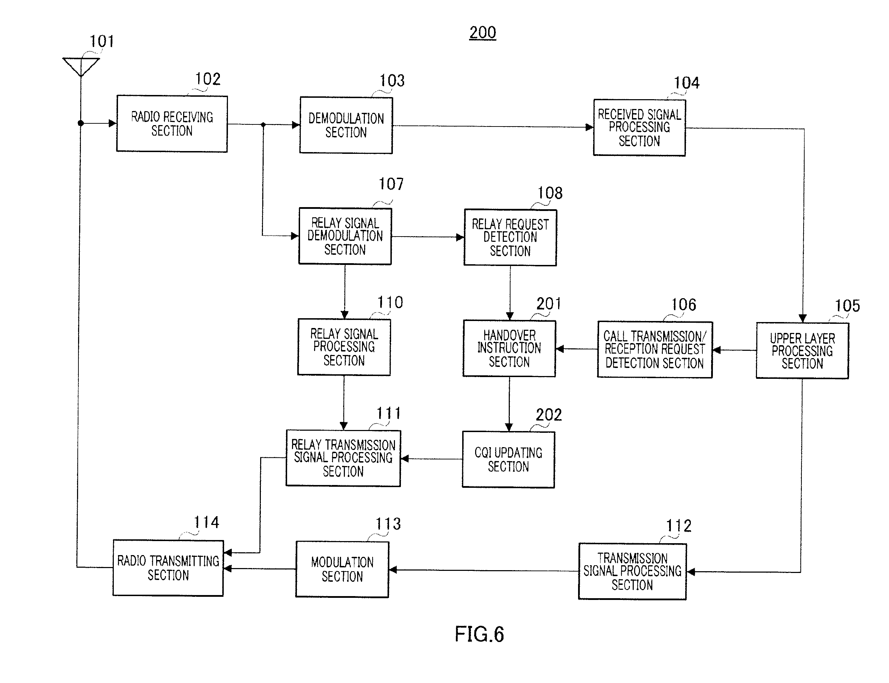

FIG.6 illustrates a configuration of mobile station 200 that performs relay transmission according to the present embodiment. In FIG.6, the same components as in FIG.2 will be assigned the same reference numerals and descriptions thereof will be omitted.

Handover instruction section 201 controls whether or not to perform handover to another relay station. To be more specific, upon receiving, from call transmission/reception request detection section 106, a signal indicating that a call transmission/reception request has been detected or upon receiving, from relay request detection section 108, a signal indicating that a relay request signal has been detected, handover instruction section 201 outputs a signal indicating a instruction for performing handover to another relay station to CQI updating section 202.

Upon receiving the signal indicating the instruction for performing handover from handover instruction section 201, CQI updating section 202 updates the CQI included in a relay signal of the other mobile station to a CQI at the lowest level. To be more specific, CQI updating section 202 updates the CQI included in the relay signal of another mobile station to 'None' shown in FIG.5.

Next, details of the CQI update processing in CQI updating section 202 will be described.

Here, a case will be described where a call transmission/reception request of MS2 is generated while MS2 having the configuration shown in FIG.6 is performing relay processing of MS1. Furthermore, in MS2, suppose the CQI number from MS1 is 2 (modulation scheme: QPSK).

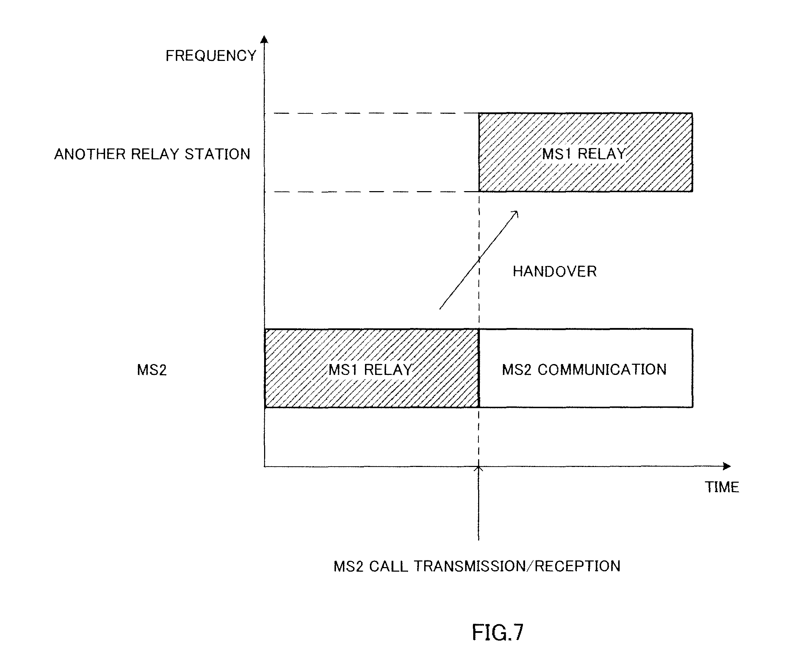

As shown in FIG.7, in MS2, call transmission/reception request detection section 106 detects a call transmission/reception request (MS2 call transmission/reception) of the signal of MS2 during communication of a relay signal of MS1 (MS1 relay). Handover instruction section 201 then outputs a signal indicating an instruction for performing handover to CQI updating section 202.

Then, CQI updating section 202 updates the CQI number from 2 (modulation scheme: QPSK) to 0 (modulation scheme: 'None'). Therefore, regardless of whether or not the CQI from MS1 shows good channel quality, MS2 relays the CQI pretending that the CQI is the lowest level to the base station.

As a result of this, the base station judges the channel quality between the base station and MS1 to be poor despite the fact that the channel quality is actually good, the CQI number of 2. As shown in FIG.7, the base station then stops performing communication via the relay station between the base station and MS1 (MS1 relay) using MS2 as the relay station and hands over the relay processing from MS2 to the other relay station. Therefore, MS1 communicates with the base station via any relay station other than MS2. As a result of this, since MS2 no longer needs to relay the relay signal of MS1, MS2 can use all available frequency resources for the signal of MS2 (MS2 communication).

Thus, according to the present embodiment, when a call transmission/reception request of a signal of the mobile station is detected during relay processing of a relay signal of another mobile station, the relay processing of the relay signal is handed over to another relay station by updating the CQI of the relay signal to the lowest level, and therefore all available frequency resources can be used for the signal of the mobile station. Therefore, according to the present embodiment, even when the communication processing of the mobile station and the relay processing of another mobile station occur at the same time, both the communication of the mobile station and the relay processing of another mobile station can be performed simultaneously and uninterruptedly.

Furthermore, according to the present embodiment, since relay transmission is performed by updating the CQI of another mobile station to the lowest level, handover can be carried out without separately transmitting a control signal to the base station in order to request the base station to perform handover. Therefore, the present invention can be implemented without changing the configuration of the base station from the conventional configuration at all.

### (Embodiment 3)

A case will be described in the present embodiment where relay processing of MS1 (another mobile station) is performed based on the charging capacity of the battery of MS2 (mobile station).

MS2 may relay a relay signal of MS1 only when the charging capacity of the battery is greater than a predetermined level. For example, each mobile station performs relay processing of MS1 only when a loss in the charging capacity by the relay processing of MS1 does not affect communication processing of MS2 (mobile station). Therefore, when there is no MS2 whose battery charging capacity is greater than the predetermined level in the mobile communication system, relay processing of MS1 is not performed at all, so that a situation in which MS1 cannot perform communication at all occurs.

Thus, in the present embodiment, it is determined whether or not MS2 (mobile station) relays a relay signal of MS1 (another mobile station) based on the charging capacity of the battery of MS2.

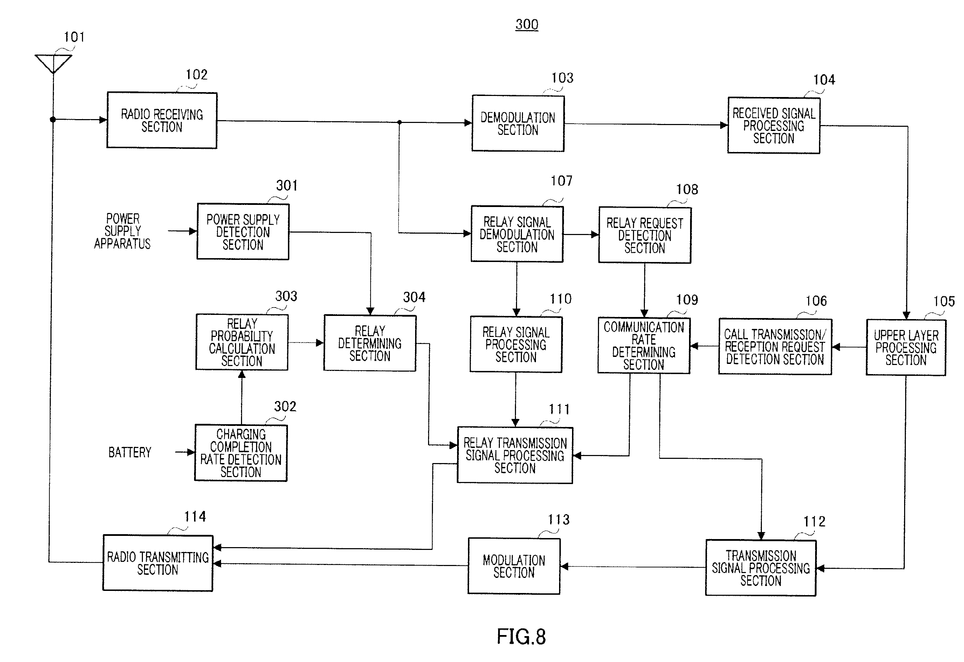

FIG.8 illustrates a configuration of mobile station 300 that performs relay transmission according to the present embodiment. In FIG.8, the same components as in FIG.2 will be assigned the same reference numerals and descriptions thereof will be omitted.

Power supply detection section 301 detects whether or not the mobile station and a power supply apparatus (e.g., AC power supply) are connected, that is, whether or not power is supplied to the mobile station. Power supply detection section 301 then outputs a signal indicating whether or not the mobile station and the power supply apparatus are connected to relay determining section 304.

Charging completion rate detection section 302 detects a charging completion rate indicating the charging capacity of the battery. To be more specific, charging completion rate detection section 302 detects the current rate of the charging capacity when the maximum charging capacity is 100% as the charging completion rate. Charging completion rate detection section 302 then outputs the detected charging completion rate to relay probability calculation section 303.

Relay probability calculation section 303 calculates a relay probability, which is a transmission probability of a relay signal of another mobile station based on the charging completion rate inputted from charging completion rate detection section 302. To be more specific, the higher the charging completion rate is (the greater the charging capacity is), the higher the relay probability calculated by relay probability calculation section 303 becomes. Relay probability calculation section 303 then outputs the calculated relay probability to relay determining section 304. Details of the relay probability calculation method in relay probability calculation section 303 will be described later.

Relay determining section 304 determines whether or not to relay a relay signal of another mobile station based on the signal, inputted from power supply detection section 301, indicating whether or not the mobile station is connected to the power supply apparatus and the relay probability inputted from relay probability calculation section 303. To be more specific, when the mobile station is connected to the power supply apparatus, relay determining section 304 determines whether or not relay the relay signal of another mobile station based on the relay probability. That is, when the mobile station is connected to the power supply apparatus and when a random number within a range of 0 to 1 generated in relay determining section 304 is equal to or less than the relay probability, relay determining section 304 determines to relay the relay signal of another mobile station. On the other hand, when the mobile station and power supply apparatus are not connected or the random number within the range of 0 to 1 generated in relay determining section 304 is greater than the relay probability, relay determining section 304 determines not to relay the relay signal of another mobile station. Relay determining section 304 then outputs a signal indicating whether or not to relay the relay signal of another mobile station to relay transmission signal processing section 111.

Upon receiving, from relay determining section 304, the signal indicating that the relay signal of another mobile station is relayed, relay transmission signal processing section 111 performs transmission signal processing of the relay signal inputted from relay signal processing section 110 as with the case of embodiment 1. On the other hand, upon receiving, from relay determining section 304, the signal indicating that the relay signal of another mobile station is not relayed, relay transmission signal processing section 111 does not perform transmission signal processing.

Next, details of the relay probability calculation method in relay probability calculation section 303 will be described.

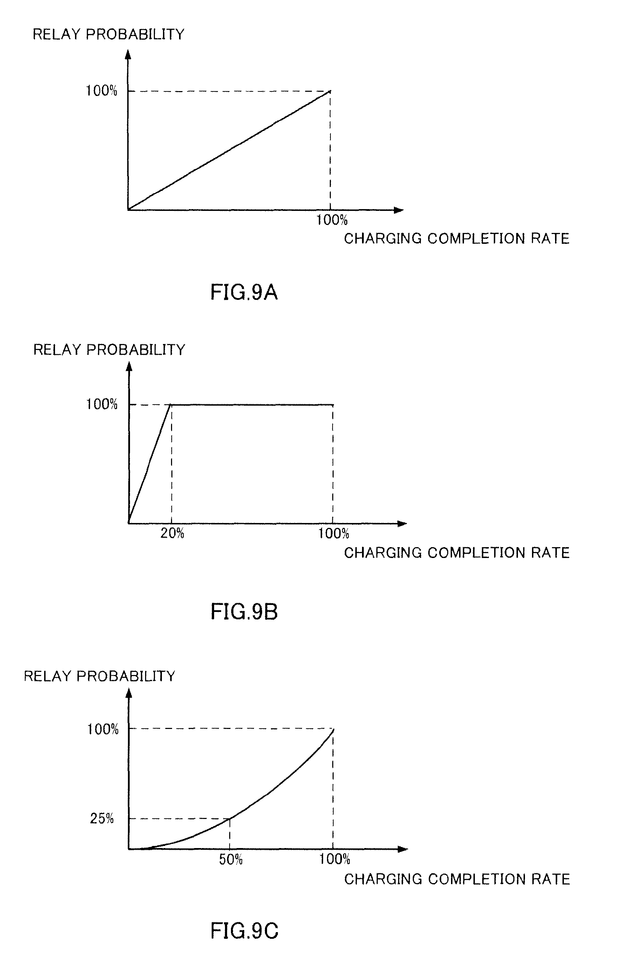

### (Calculation method 1: FIG.9A)

According to the present calculation method, relay probability calculation section 303 calculates a relay probability proportional to the charging completion rate. For example, as shown in FIG.9A, relay probability calculation section 303 assumes the relay probability to be 50% when the charging completion rate is 50% and assumes the relay probability to be 100% when the charging completion rate is 100%. That is, in FIG.9A, relay probability calculation section 303 calculates a relay probability having the same value as the charging completion rate.

Relay determining section 304 then determines whether or not to relay the relay signal of another mobile station based on the charging completion rate calculated by relay probability calculation section 303. As shown in FIG.9A, MS2 has a possibility to relay the relay signal of MS1 at any charging completion rates. In other words, MS2 has no possibility not to relay the relay signal of MS1 (relay probability: 0%). That is, no matter how small the charging capacity of the battery may be, MS2 leaves the possibility of relaying the relay signal of MS1 although the relay probability decreases. Therefore, MS2 is more likely to relay the relay signal of MS1.

Thus, according to the present calculation method, the higher the charging completion rate is, the higher the relay probability that the relay signal will be relayed becomes. By this means, the relay signal of another mobile station is likely to be relayed at any charging completion rates, and therefore it is possible to increase the probability that the mobile station may relay the relay signal of another mobile station. Therefore, according to the present calculation method, it is possible to prevent a situation in which the mobile station unable to directly communicate with the base station cannot communicate with the base station at all. Furthermore, the present calculation method can be implemented in a simple circuit configuration by which the charging completion rate is multiplied by a constant.

### (Calculation method 2: FIG.9B)

If the charging capacity (charging completion rate) of the battery is greater than a predetermined charging capacity, a loss in the charging capacity caused by performing the relay processing by the mobile station does not affect the system. That is, when the charging capacity is greater than the predetermined charging capacity, the mobile station can relay a relay signal of another mobile station without influencing the communication processing of the mobile station.

Thus, according to the present calculation method, relay probability calculation section 303 calculates the relay probability proportional to the charging completion rate as with the case of calculation method 1 when the charging completion rate is equal to or less than the predetermined charging completion rate, and maximizes the relay probability when the charging completion rate is greater than the predetermined charging completion rate.

Here, a case where the predetermined charging completion rate is, for example, 20% will be described. As shown in FIG.9B, when the detected charging completion rate is equal to or less than 20%, relay probability calculation section 303 calculates the relay probability proportional to the charging completion rate as with the case of calculation method 1. To be more specific, relay probability calculation section 303 sets the relay probability to 50% when the charging completion rate is 10% and sets the relay probability to 100% when the charging completion rate is 20%. On the other hand, as shown in FIG.9B, when the detected charging completion rate is greater than 20%, relay probability calculation section 303 sets the relay probability to 100% which is the maximum rate.

That is, when the charging completion rate is high and the relay processing of MS1 (another mobile station) can be performed without influencing the communication processing of MS2 (mobile station), MS2 reliably performs the relay processing of MS1. This further increases the possibility that MS1 unable to directly communicate with the BS can perform communication via MS2. On the other hand, when the charging completion rate is low and there is a possibility that the relay processing of MS1 (another mobile station) may affect the communication processing of MS2 (mobile station), MS2 performs relay processing of MS1 with a probability based on the charging completion rate while charging the battery. By this means, even when the charging completion rate is low, as with the case of calculation method 1, it is possible to prevent a situation in which the mobile station unable to directly communicate with the base station cannot perform communication at all.

Thus, according to the present calculation method, when the charging completion rate is greater than a predetermined charging completion rate, the relay probability is maximized. Therefore, when the charging completion rate is greater than the predetermined charging completion rate, the mobile station can reliably relay a relay signal of another mobile station. Furthermore, even when the charging completion rate is equal to or less than the predetermined charging completion rate, the mobile station relays the relay signal of another mobile station with a probability based on the charging completion rate. Therefore, as with the case of calculation method 1, it is possible to prevent a situation in which the mobile station unable to directly communicate with the base station cannot perform communication at all and increase the possibility that the relay signal of another mobile station may be relayed.

### (Calculation method 3: FIG.9C)

When communication processing of MS2 occurs while MS2 (mobile station) is relaying a relay signal of MS1 (another mobile station) in a state in which a charging completion rate of a battery is low (the charging capacity is small), MS2 may lack the charging capacity and may be unable to perform communication processing of MS2. As a result of this, for example, in order to perform emergent communication processing of MS2 (mobile station), MS2 needs to leave a minimum charging capacity for communication processing of MS2. That is, even when the charging completion rate is low (charging capacity is small), MS2 (mobile station) needs to secure the charging capacity for the communication processing of MS2.

Therefore, according to the present calculation method, relay probability calculation section 303 reduces a variation in the relay probability in a range of a lower charging completion rate, in the range within which the charging completion rate can fall.

For example, as shown in FIG.9C, relay probability calculation section 303 calculates the n-th power (n=2 in FIG.9C) of the detected charging completion rate as the relay probability. To be more specific, relay probability calculation section 303 assumes the relay probability to be 25% when the charging completion rate is 50% and assumes the relay probability to be 100% when the charging completion rate is 100%. Here, while a variation in the relay probability is 25% in a range in which the charging completion rate is 0% (relay probability: 0%) to 50% (relay probability: 25%), a variation in the relay probability becomes 75% in a range in which the charging completion rate is 50% (relay probability: 25%) to 100% (relay probability: 100%). That is, even when the variation in the charging completion rate is the same, the variation in the relay probability is smaller in a range of lower charging completion rate, so that the relay probability calculated by relay probability calculation section 303 remains a low value.

Here, when the present calculation method (FIG.9C) is compared with calculation method 1 (FIG.9A), the relay probability increases as the charging completion rate increases in both methods, but when the charging completion rate is the same, the relay probability of the present calculation method is lower than the relay probability of calculation method 1. That is, according to the present calculation method, the relay probability is lower when the charging completion rate is lower. Therefore, when the charging completion rate is lower, although there is a possibility that MS2 may relay a relay signal of MS1, MS2 (mobile station) can give higher priority to securing of the charging capacity for the communication processing of MS2 than the relay processing of the relay signal of MS1.

Thus, when the charging completion rate is lower, the present calculation method lowers the relay probability of relay transmission of the relay signal of another mobile station. This allows the mobile station to preferentially secure the charging capacity for communication processing of the mobile station while leaving a possibility of relaying the relay signal of another mobile station. Therefore, according to the present calculation method, it is possible to prevent a situation in which the mobile station unable to directly communicate with the base station cannot perform communication at all without influencing the communication processing of the mobile station that performs relay transmission. Furthermore, as with the case of calculation method 1, the present calculation method can be implemented in a simple circuit configuration by which the charging completion rate is multiplied by a constant.

Relay probability calculation methods 1 to 3 in relay probability calculation section 303 have been described so far.

Furthermore, when a call transmission/reception request of a signal of MS2 (mobile station) is detected during relay processing of a relay signal of MS1 after determining relay transmission of the relay signal of MS1 (another mobile station) or a relay request of the relay signal of MS1 is detected during communication of the signal of MS2, MS2 uses available frequency resources divided and multiplexed between communication processing of MS2 and the relay processing of the relay signal as with the case of Embodiment 1. Here, in the present embodiment, as with the case of embodiment 2 (FIG.6), MS2 updates the CQI of the relay signal to a minimum level, so that the relay processing of the relay signal of MS1 can be handed over to another relay station .

Thus, according to the present embodiment, the mobile station determines whether or not to relay the relay signal of another mobile station based on the charging completion rate of the battery. In this way, the relay signal of another mobile station may be relayed at any charging completion rates, and the relay probability of the relay signal of another mobile station can be increased. Therefore, according to the present embodiment, it is possible to prevent a situation in which the mobile station unable to directly communicate with the base station cannot perform communication at all, regardless of a value of the charging capacity of the mobile station that performs relay transmission.

Furthermore, in the present embodiment, the mobile station relays the relay signal of another mobile station only when the mobile station is connected to a power supply apparatus (e.g., AC power supply). In this case, since the mobile station always receives a supply of predetermined power from the power supply apparatus, it is possible to shorten the time required to complete charging of the battery while relay processing of the relay signal of another mobile station is performed. Therefore, shortening the time period required to complete charging of the battery makes it possible to increase the possibility that there may still remain the charging capacity for performing communication processing of the mobile station.

Here, in the present embodiment, the mobile station that performs relay transmission may be connected to a power supply apparatus (e.g., AC power supply) and limited to a mobile station in an ecology mode. Here, the ecology mode refers to a mode in which the charging completion rate is not set to 100% but is to 70 to 80% in order to extend the battery life of the battery (e.g., lithium battery). In this case, relay probability calculation section 303 of mobile station 300 shown in FIG.8 calculates the relay probability by replacing the charging completion rate 100% shown in FIGs.9A to C with the maximum charging completion rate (e.g. , charging completion rate 70%) in the ecology mode. Furthermore, relay determining section 304 receives information indicating whether the charging mode is the normal mode (maximum charging completion rate: 100%) or the ecology mode (maximum charging completion rate: 70 to 80%). This makes it possible to obtain effects similar to those of the present embodiment also in the ecology mode.

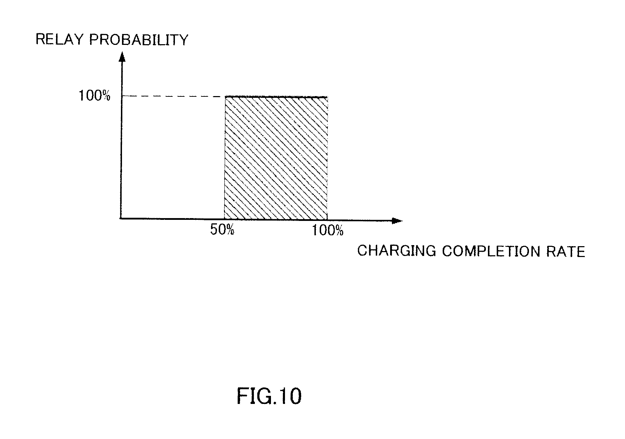

Furthermore, relay probability calculation section 303 (FIG.8) of mobile station 300 of the present embodiment may calculate a relay probability so as to have the same average relay probability as that of a conventional relay determining method. For example, as shown in FIG.10, according to the conventional relay determining method, a relay signal is relayed only when the charging completion rate (charging capacity) is greater than a predetermined level (50% in FIG.10). To be more specific, as shown in FIG.10, when the charging completion rate is equal to or less than 50%, relay transmission of a relay signal is not performed at all (relay probability: 0%), whereas when the charging completion rate is greater than 50%, relay transmission of a relay signal is always performed (relay probability: 100%). That is, according to the relay determining method shown in FIG.10, an average relay probability, which is the relay probability of the relay signal of the charging completion rate over the range of 0 to 100%, is 50%. Here, the dimensional size of the shaded area in FIG.10 corresponds to the average relay probability.

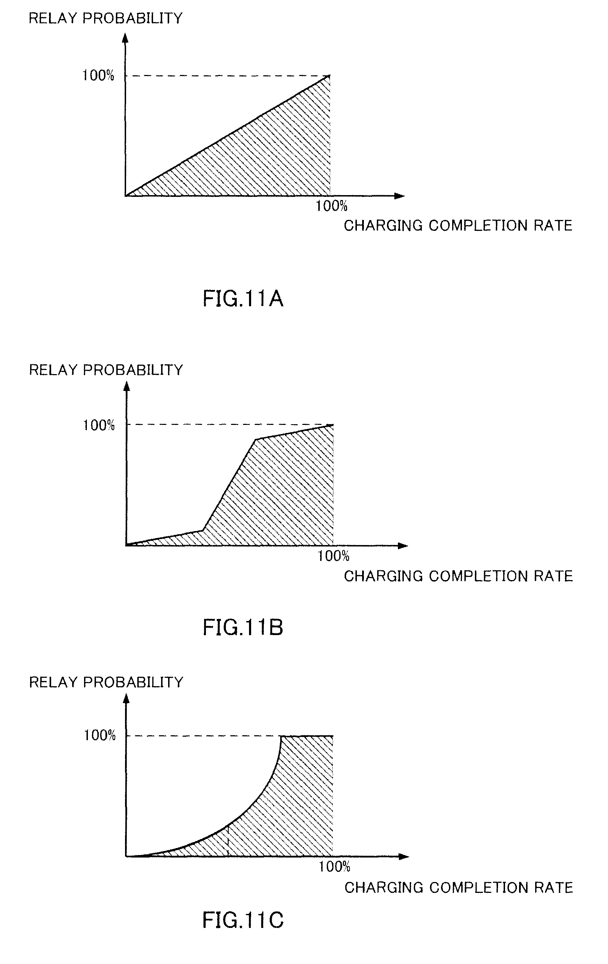

Accordingly, relay probability calculation section 303 may calculate a relay probability based on the relationship between the charging completion probability and relay probability, which becomes the same size as that of the shaded area in FIG.10. For example, relay probability calculation section 303 calculates the relay probability based on one of relationships between the charging completion probability and the relay probability shown in FIGs.11A to 11C. Here, the dimensional size of the shaded area in each of FIGs.11A to 11C is the same as the dimensional size of the shaded area in FIG.10. That is, the average relay probability when relay probability calculation section 303 calculates the relay probability based on one of FIGs.11A to 11C becomes 50%, the same as in FIG.10. Thus, since the average relay probability is the same, power consumed when mobile station 300 performs relay processing of another mobile station based on one of FIGs.11A to 11C also becomes the same as that when the relay determining method of FIG.10 is used. However, mobile station 300 calculates the relay probability based on one of FIGs.11A to 11C, and therefore there still remains a possibility that the relay signal of another mobile station may be relayed at any charging completion rates, as with the case of the present embodiment. Thus, even if power consumption required for relay processing (average relay probability) is the same, there is a situation in which the mobile station unable to directly communicate with the base station cannot perform communication at all in the conventional relay determining method shown in FIG.10, whereas it is possible to obtain the effect similar to that of the present embodiment in FIGs.11A to 11C.

Embodiments of the present invention have been described so far.

The mobile station may be referred to as "UE" and the base station may be referred to as "Node B."

Also, although cases have been described with the above embodiment as examples where the present invention is configured by hardware, the present invention can also be realized by software.

Each function block employed in the description of the above-described embodiments may typically be implemented as an LSI configured by an integrated circuit. Each function block employed in the description of each of the aforementioned embodiments may typically be implemented as an LSI constituted by an integrated circuit. These may be individual chips or partially or totally contained on a single chip. These may be individual chips or partially or totally contained on a single chip. "LSI" is adopted here but this may also be referred to as "IC," "system LSI," "super LSI," or "ultra LSI" depending on differing extents of integration.

Further, the method of circuit integration is not limited to LSI's, and implementation using a dedicated circuitry or a general purpose processor is also applicable. Further, the method of circuit integration is not limited to LSI's, and implementation using dedicated circuitry or general purpose processors is also possible. After LSI manufacture, utilization of an FPGA (Field Programmable Gate Array) or a reconfigurable processor where connections and settings of circuit cells within an LSI can be reconfigured is also possible.

Further, if integrated circuit technology comes out to replace LSI's as a result of the advancement of semiconductor technology or a derivative other technology, it is naturally also possible to carry out function block integration using this technology. Application of biotechnology is also possible.

The disclosures of Japanese Patent Application No.2007-232960, filed on September 7, 2007 and Japanese Patent Application No.2008-016468, filed on January 28, 2008, including the specification, drawings and abstracts are incorporated herein by reference in their entirety.

### Industrial Applicability

The present invention is applicable to a mobile communication system and so forth.

## Claims

1. A radio communication apparatus comprising:
a first detection section that detects call transmission or call reception of a first signal of the radio communication apparatus;
a second detection section that detects a relay request of a second signal of another radio communication apparatus; and
a transmitting section that transmits both the first signal and the second signal simultaneously when the call transmission or the call reception is detected during relay transmission of the second signal or when the relay request is detected during transmission of the first signal.

2. The radio communication apparatus according to claim 1, wherein the transmitting section transmits the first signal using a part of communication resources allocated to the radio communication apparatus and transmits the second signal using communication resources other than the part of the communication resources.

3. The radio communication apparatus according to claim 2, wherein the transmitting section transmits the first signal and the second signal using each half of the communication resources allocated to the radio communication apparatus.

4. The radio communication apparatus according to claim 1, further comprising:
a third detection section that detects a charging capacity of a battery;
a calculation section that calculates a transmission probability of the second signal based on the charging capacity; and
a determining section that determines whether or not to relay the second signal based on the transmission probability.

5. The radio communication apparatus according to claim 4, wherein the calculation section calculates higher transmission probability as the charging capacity increases.

6. The radio communication apparatus according to claim 5, wherein the calculation section maximizes the transmission probability when the charging capacity is greater than a predetermined value.

7. The radio communication apparatus according to claim 5, wherein the calculation section reduces a variation in the transmission probability in smaller ranges, in a plurality of ranges within which the charging capacity can fall.

8. The radio communication apparatus according to claim 4, further comprising a fourth detection section that detects whether or not the radio communication apparatus and a power supply apparatus are connected, wherein:
the determining section determines whether or not to relay the second signal based on the transmission probability when a connection is detected.

9. A transmission method for transmitting, when call transmission or call reception of a first signal is detected during relay transmission of a second signal or a relay request of the second signal is detected during transmission of the first signal, both the first signal and the second signal simultaneously.
